# FASCICULE DE BREVET EUROPEEN

(11) **EP 0 263 156 B1**
(45) Date de publication et mention de la délivrance du brevet: **09.06.1993**
(21) Numéro de dépôt: 87902542.7
(22) Date de dépôt: 13.04.1987
(51) Int. Cl.: G09B 23/32, G09B 9/00

(54) **MANNEQUIN DESTINE A L'ENTRAINEMENT DES EQUIPES DE SECOURISME**
PUPPE ZUM TRAINIEREN VON RETTUNGSGRUPPEN
DUMMY INTENDED FOR THE TRAINING OF FIRST AID TEAMS

(30) Priorité: 18.04.1986 FR 8605749
(43) Date de publication de la demande: 13.04.1988
(73) Titulaire: DORLEANS, Daniel, F-56190 Arzal (FR); DIGUET, Edmée, F-56190 Arzal (FR)
(72) Inventeur: DORLEANS, Daniel, F-56190 Arzal (FR); DIGUET, Edmée, F-56190 Arzal (FR)
(74) Mandataire: Dubreuil, Annie
(86) Numéro de dépôt international: FR8700120
(87) Numéro de publication internationale: WO8706382

(56) Documents cités:
- CH-A- 102 564
- CH-A- 323 347
- CH-A- 347 371
- DE-C- 448 413
- FR-A- 2 218 808
- FR-A- 2 395 055
- GB-A- 1 488 626
- US-A- 4 575 351

## Description

L'invention concerne un mannequin destiné à l'entraînement des équipes de secourisme.

Il est indispensable en effet que toute personne qui, dans le cadre de ses fonctions risque un jour d'être amenée à secourir une personne en danger subisse régulièrement des exercices d'entraînement consistant par exemple, à localiser la ou les victimes, à le ou les déplacer, à intervenir au niveau des premiers soins.

Toutes ces opérations doivent être effectuées en respectant un certain nombre de règles. En effet, la victime peut présenter des fractures et se trouver avec des membres dans tous les sens, et sa manipulation est délicate et dangereuse. Il y a donc des gestes qui sauvent à apprendre et à maîtriser. Le mannequin est là pour aider à la simulation du plus grand nombre de figures possibles. Par exemple, le secouriste doit s'entraîner à la pose de masque respiratoire, d'attelles ou de gouttières. Il doit aussi savoir placer sa victime dans tous moyens de transport appropriés (traineau, hélicoptère...).

Ces entraînements s'appliquent à tout type de sinistre tels que feu, voiture, toit, bureau, montagne, cave, fond de puit, escalier, naufragé...

Différentes solutions sont actuellement mises en oeuvre pour ces entraînements mais elles présentent notamment l'inconvénient, soit de ne pas répondre au besoin réel des utilisateurs, soit de ne pas résister aux milieux souvent agressifs auxquels elles sont confrontées, ce qui conduit en fin de compte à des coûts excessifs de remplacement du matériel mis en oeuvre.

La présente invention a pour objet de pallier ces inconvénients car elle concerne un mannequin réalisé en un matériau résistant et selon une conception originale qui lui permet d'une part de résister à un grand nombre d'exercices, d'autre part d'être facilement réparé en cas de besoin.

Elle concerne plus précisément un mannequin destiné à l'entraînement des équipes de secourisme, ce mannequin étant constitué d'une peau extérieure (2) reproduisant les parties essentielles d'un corsp humain : tête (3), bras (4), tronc (5), jambes (6), et étant caractérisé en ce que cette peau extérieure (2) est réalisée en une toile résistante ignifugée; en ce qu'elle comporte une face avant (AV) et une face arrière (AR) divisées en deux parties, chacune d'elle étant coupée dans le droit fil du tissu selon un axe horizontal (H) pour la partie haute contenant les bras et selon un axe vertical (V) pour la partie basse contenant les jambes, ces deux parties étant reliées entre elles par au moins une couture (10); en ce que des bandes de tissu pris dans le droit fil et coupé en sifflet forment des soufflets (40, 60) et des renforts (30) renforçant la peau extérieure (2) respectivement au niveau des aisselles, de l'entre- jambes et du cou; et en ce que des coutures (203) et (204) assurent une souplesse au niveau des genoux et des coudes.

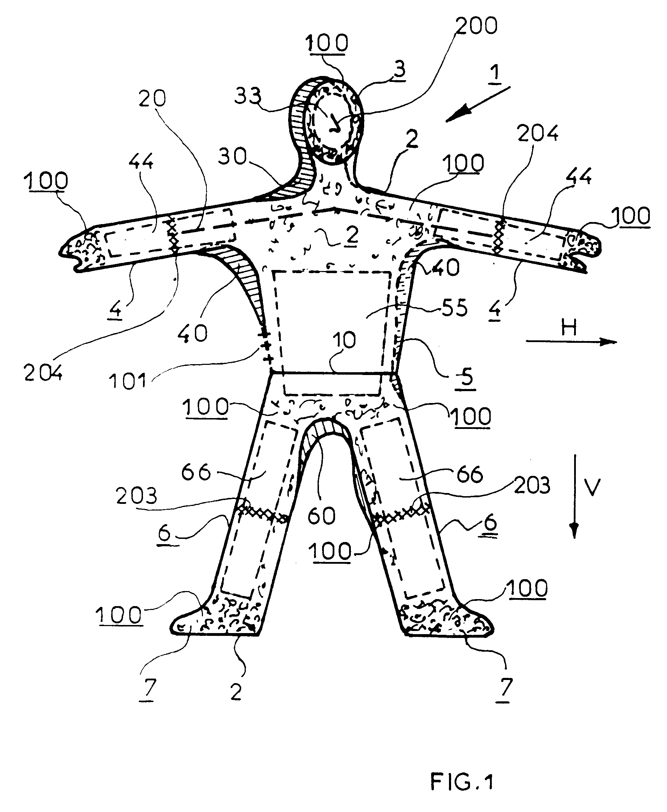

L'invention sera mieux comprise à l'aide des explications qui vont suivre et de la figure unique jointe qui illustre schématiquement un mannequin conforme à l'invention.

Comme le montre la figure jointe, un mannequin (1) selon l'invention est constitué d'une peau extérieure (2) qui présente le profil schématique d'un homme avec une tête (3), deux bras (4), un tronc (5), deux jambes (6) et deux pieds (7).

Selon une caractéristique importante de l'invention, cette peau extérieure (2) est constituée par deux faces avant (AV) et arrière (AR). Seule la face avant (AV) est visible mais la seconde est symétrique de la première. L'une et l'autre face (AV, AR) sont réalisées en un tissu résistant notamment au feu, tel que du lin ignifugé par exemple. Ces deux faces (AV) et (AR) sont réalisées en deux parties. La partie haute comporte la tête (3), les bras (4) et une partie du tronc (5) jusqu'au niveau de la ceinture qui est délimitée par une ou deux coutures (10). La partie basse comporte le tronc (5) à partir de la couture (10), les jambes (6) et les pieds (7). Grâce à cette découpe et à ce montage, le tissu ainsi assemblé permet d'être dans le droit fil selon l'axe vertical (V) au niveau des jambes (6) et selon l'axe horizontal (H) au niveau des bras (4), le tout étant relié par la couture (10).

Selon une autre caractéristique de l'invention, des bandes de tissu pris également dans le droit fil et coupé en sifflet (40) et (60) forment des soufflets et renforcent respectivement les aisselles et l'entre-jambes. Ces soufflets (40) et (60) ont pour fonction d'éviter l'arrachage des bras et des jambes. De la même manière, des renforts (30) sont prévus au niveau du cou. Au niveau des articulations des genoux et des coudes, des coutures (203) et (204) assurent une souplesse de ces zones normalement articulées.

Selon une autre caractéristique de l'invention, le remplissage de cette peau extérieure (2) qui donne forme, maintien et poids au mannequin (1) est assuré par au moins deux types d'éléments. Le premier assure la fonction de lestage et le second, la fonction de rembourrage.

La fonction de lestage, conformément à l'invention, est réalisée au moyen de poches amovibles, indépendantes de la peau (2), mais de géométrie adaptée. L'une (55) est disposée au niveau du tronc, deux autres (44) et (66) dans chacun des bras et chacune des jambes. Enfin, une autre (33) est placée dans la tête. Ces poches (55), (44), (66) et (33) sont remplies par le matériau choisi pour le lestage, tel que du sable par exemple. Eventuellement, des moyens de liaison (non représentés) maintiennent entre eux les poches de lestage.

La fonction de rembourrage du mannequin (1) est obtenue par remplissage des volumes libres (100) après mise en place des poches de lestage (55), (44), (66) et (33) au moyen de chute de tissu naturel ignifugé ou tout autre matériau adapté tel que la mousse expansée entre autre.

Selon une variante plus élaborée, le visage du mannequin est esquissé, notamment par la mise en place d'un nez (200) et, éventuellement, un profil d'yeux. De plus, des moyens d'accrochage d'accessoires peuvent être prévus, tels que l'accrochage de masques respiratoires. Ces moyens d'accrochage (non représentés) peuvent être constitués par des bandes auto-agrippantes. Pour certaines applications, un tube (20) rigide est introduit dans les bras, et a pour fonction de rigidifier le mannequin au niveau des épaules.

La fermeture finale (101) du mannequin (1) (illustrée par une série de petites croix) est soit une couture avec fil extérieur, soit une fermeture à crochet métallique protégé par un rabat de tissu ou tout autre moyen équivalent. En tout état de cause, elle est prévue pour permettre de retirer et/ou de mettre en place les poches de lestage et le matériau de rembourrage lors de la fabrication du mannequin, mais également, à chaque fois que le mannequin (1) doit être réparé. Ainsi, ce dernier, s'il doit être transporté pour réparation, peut être délesté et le coût du transport s'en trouve réduit. Lorsque la peau extérieure (2) s'avère inutilisable, elle peut être changée, les poches de lestage et le rembourrage pouvant être réutilisés ainsi que le tube (20).

Selon une autre caractéristique importante de l'invention, le mannequin (1) selon l'invention est confectionné avec un fil de couture résistant et peu sensible au feu, quasiment ignifugé, tel que du fil kevlar. La plupart des coutures sont tournées vers l'intérieur du mannequin, toutes les coutures sont doublées, surjettées, et seule la couture des poches de lestage est apparente.

Comme cela a déjà été dit, le matériau utilisé pour réaliser la peau extérieure (2) ainsi que pour les fils de couture doit être résistant. Il s'agit par exemple pour la peau, d'une grosse toile de lin ignifugé, peu sensible à l'eau, au gas oil, à la suie...

En effet, le mannequin (1) a pour fonction d'être utilisé et manipulé dans un grand nombre d'exercices, traîné par terre sur le bitume ou le béton. Les risques d'émanations nocives, notamment en cas d'utilisation au feu doivent être nuls, ou tout au moins doivent respecter les normes en vigueur. La toile doit aussi résister aux projections d'eau et hydrocarbure mais, en revanche, elle doit être sensible aux acides.

Dans le cas où le mannequin selon l'invention est appelé à servir dans l'eau, il peut être revêtu d'une combinaison étanche. Il peut être également, pour tous usages, revêtu d'une combinaison en matériau non tissé dont la particularité est d'être anti-salissure (notamment anti-poussières).

En résumé, la conception du mannequin (1) selon l'invention permet d'entraîner son utilisateur à faire attention exactement comme s'il se trouvait devant une victime dans pratiquement tous les cas de figure des sinistres possibles.

Un tel mannequin trouve son application dans toutes les disciplines du secourisme, au niveau de l'entraînement du personnel, en simulation de cas réels et notamment en cours d'exercice de lutte contre le feu.

## Revendications

1. Mannequin destiné à l'entraînement des équipes de secourisme, ce mannequin étant constitué d'une peau extérieure (2) reproduisant les parties essentielles d'un corsp humain : tête (3), bras (4), tronc (5), jambes (6), et étant caractérisé en ce que cette peau extérieure (2) est réalisée en une toile résistante ignifugée; en ce qu'elle comporte une face avant (AV) et une face arrière (AR) divisées en deux parties, chacune d'elle étant coupée dans le droit fil du tissu selon un axe horizontal (H) pour la partie haute contenant les bras et selon un axe vertical (V) pour la partie basse contenant les jambes, ces deux parties étant reliées entre elles par au moins une couture (10); en ce que des bandes de tissu pris dans le droit fil et coupé en sifflet forment des soufflets (40, 60) et des renforts (30) renforçant la peau extérieure (2) respectivement au niveau des aisselles, de l'entre- jambes et du cou; et en ce que des coutures (203) et (204) assurent une souplesse au niveau des genoux et des coudes.

2. Mannequin selon la revendication 1, caractérisé en ce que le remplissage de cette peau extérieure (2) est assuré au moyen, d'une part de poches de lestage (44), (66), (55) et (33) remplies d'un matériau de lestage, indépendantes de la peau (2) et donc amovibles, mais adaptées à la zone où elles sont placées, respectivement, les bras (4), les jambes (6), le tronc (5), la tête (3), et au moyen, d'autre part, d'un rembourrage remplissant le volume libre (100) qui entoure lesdites poches de lestage (44), (66), (55) et (33).

3. Mannequin selon la revendication 1 ou 2, caractérisé en ce qu'une fermeture (101) permet de mettre en place et de retirer les poches de lestage (44), (66), (55), (33) et le rembourrage qui les entoure dans le volume libre (100).

4. Mannequin selon l'une des revendications précédentes, caractérisé en ce que la peau (2) est réalisée en une grosse toile de lin ignifugée.

5. Mannequin selon l'une des revendications précédentes, caractérisé en ce qu'il comporte des moyens d'accrochage d'accessoires.

6. Mannequin selon l'une des revendications précédentes, caractérisé en ce qu'il comporte un tube (20) enfilé au niveau des bras, dont la fonction est de rigidifier le mannequin au niveau des épaules.

7. Mannequin selon l'une des revendications précédentes, caractérisé en ce qu'il est lui-même revêtu d'une combinaison anti-poussières.

8. Mannequin selon l'une des revendications précédentes, caractérisé en ce qu'il est revêtu d'une combinaison étanche.

## Claims

1. A dummy intended for training first aid teams, this dummy being composed of an outer skin (2) reproducing the essential parts of a human body: head (3), arms (4), trunk (5), legs (6), and being characterised in that this outer skin (2) is made of a strong, fire-retardant cloth; in that it comprises a front face (AV) and a rear face (AR) divided into two portions, each of them being cut with the warp of the fabric along a horizontal axis (H) for the upper portion containing the arms and along a vertical axis (V) for the lower portion comprising the legs, these two portions being connected together by at least one seam (10); in that strips of fabric taken with the warp and cut on a bevel form gussets (40, 60) and strengthening pieces (30) reinforcing the outer skin (2) respectively at the armpits, the crotch and the neck; and in that seams (203) and (204) ensure flexibility at the knees and elbows.

2. A dummy according to Claim 1, characterised in that this outer skin (2) is filled, on the one hand, by means of ballast bags (44), (66), (55), and (33) filled with a ballasting material, independent of the skin (2) and therefore removable, but fitting the area where they are placed, respectively the arms (4), the legs (6), the trunk (5), the head (3) and, on the other hand, by means of stuffing which fills the free volume (100) surrounding said ballast bags (44), (66), (55) and (33).

3. A dummy according to Claim 1 or 2, characterised in that a closure (101) makes it possible to put in position and remove the ballast bags (44), (66), (55), (33) and the stuffing that surrounds them in the free volume (100).

4. A dummy according to one of the preceding claims, characterised in that the skin (2) is made of a thick fire-retardant linen cloth.

5. A dummy according to one of the preceding claims, characterised in that it comprises means for hooking on accessories.

6. A dummy according to one of the preceding claims, characterised in that it comprises a tube (20) threaded through the arms, the function of which is to make the dummy rigid at the shoulders.

7. A dummy according to one of the preceding claims, characterised in that it is itself coated with an anti-dust compound.

8. A dummy according to one of the preceding claims, characterised in that it is coated with a waterproof compound.

## Patentansprüche

1. Puppe zum Trainieren von Rettungsmannschaften, wobei die Puppe aus einer Außenhaut (2) gebildet ist, die die wesentlichen Teile eines menschlichen Körpers nachahmt, nämlich den Kopf (3), die Arme (4), den Rumpf (5), die Beine (6), und die dadurch gekennzeichnet ist, daß diese Außenhaut (2) aus einem feuersicheren, widerstandsfähigen Leinen hergestellt ist; daß sie eine Vorderseite (AV) und eine Hinterseite (AR) aufweist, die in zwei Teile unterteilt sind, wobei jede von ihnen für den die Arme enthaltenden oberen Teil in Fadenrichtung des Gewebes längs einer horizontalen Achse (H) und für den die Beine enthaltenden unteren Teil längs einer vertikalen Achse (V) geschnitten ist, wobei diese zwei Teile durch wenigstens eine Naht (10) miteinander verbunden sind; daß Bänder aus in der Fadenrichtung genommenem und schräg geschnittenem Stoff Bälge (40, 60) und Verstärkungen (30) bilden, die die Außenhaut (2) jeweils auf Höhe der Achselhöhlen, des Schrittes und des Halses verstärken; und daß die Nähte (203) und (204) eine Geschmeidigkeit auf Höhe der Knie und der Ellbogen sicherstellen.

2. Puppe nach Anspruch 1, dadurch gekennzeichnet, daß die Füllung dieser Außenhaut (2) einerseits mittels Ballasttaschen (44), (66), (55) und (33) sichergestellt ist, die mit einem Ballastmaterial gefüllt, unabhängig von der Haut (2) und demnach abnehmbar, aber an die Zone angepaßt sind, an die sie gesetzt sind, nämlich die Arme (4), die Beine (6), den Rumpf (5) den Kopf (3), und andererseits mittels einer Füllung, die den freien Raum (100) füllt, der die Ballasttaschen (44), (66), (55) und (33) umgibt.

3. Puppe nach Anspruch 1 oder 2, dadurch gekennzeichnet, daß es ein Verschluß (101) ermöglicht, die Ballasttaschen (44), (66), (55), (33) sowie die Füllung, die sie in dem freien Raum (100) umgibt, einzusetzen und herauszuziehen.

4. Puppe nach einem der vorhergehenden Ansprüche, dadurch gekennzeichnet, daß die Haut (2) in grober, fernersicherer Leinwand hergestellt ist.

5. Puppe nach einem der vorhergehenden Ansprüche, dadurch gekennzeichnet, daß sie Mittel zur Befestigung von Zubehör aufweist.

6. Puppe nach einem der vorhergehenden Ansprüche, dadurch gekennzeichnet, daß sie ein Rohr (20) aufweist, das auf Höhe der Arme eingeführt ist und dessen Funktion in der Versteifung der Puppe liegt.

7. Puppe nach einem der vorhergehenden Ansprüche, dadurch gekennzeichnet, daß sie selbst mit einer staubverhindernden Kombination bekleidet ist.

8. Puppe nach einem der vorhergehenden Ansprüche, dadurch gekennzeichnet, daß sie mit einer dichten Kombination bekleidet ist.
